# NOUVEAU FASCICULE DE BREVET EUROPEEN

(11) **EP 2 679 466 B2**
(45) Date de publication et mention de la décision concernant l'opposition: **27.06.2018**
(45) Mention de la délivrance du brevet: 08.04.2015
(21) Numéro de dépôt: 13173858.5
(22) Date de dépôt: 26.06.2013
(51) Int. Cl.: B61L 15/00, B61L 25/02

(54) **Procédé de détermination de la composition d'un train en sécurité**
Sicheres Verfahren zu Bestimmung der Zusammenstellung eines Zugs
Method for safely determining the composition of a train

(30) Priorité: 27.06.2012 FR 1256126
(43) Date de publication de la demande: 01.01.2014
(73) Titulaire: ALSTOM Transport Technologies, 93400 Saint-Ouen (FR)
(72) Inventeur: Linares, Hervé Lucien Michel, 92700 Colombes (FR); Van den Hende, Jean-Christophe, 92800 Puteaux (FR)
(74) Mandataire: Lavoix

(56) Documents cités:
- EP-A1- 1 013 533
- EP-A1- 1 403 162
- EP-A2- 1 306 283
- WO-A1-2012/069223
- DE-A1-102006 018 163
- DE-A1-102010 014 333
- US-A1- 2006 180 709
- US-A1- 2011 224 850
- Normentwurf zu IEC 61375-2-5 "Electronic Railway Equipment- Train Backbone- Part 2.5: Ethernet Train Backbone"

## Description

La présente invention concerne un procédé de détermination de la composition d'un train comportant une pluralité de véhicules groupés en unités successives reliées entre elles, parmi lesquelles une unité de tête et une unité de queue, le train comportant :
un dispositif de gestion de la sécurité par unité, chaque dispositif ayant deux identifiants qui lui sont propres,
un lien de communication d'attelage pour chaque paire d'unités adjacentes, chaque lien de communication d'attelage reliant seulement deux dispositifs d'unités adjacentes,
un réseau général reliant tous les dispositifs entre eux,le procédé comprenant une étape initiale d'émission, par chaque dispositif, sur le réseau général, d'un message de diffusion non sécurisé comportant ses deux identifiants, et une étape de réception, par chaque dispositif, de messages comportant les identifiants des autres dispositifs.

Dans la suite du document, une unité désigne un ensemble de véhicules solidaires et non séparables.

Un exemple concerne un train, comportant une pluralité de véhicules groupés en unités successives reliées entre elles, parmi lesquelles une unité de tête et une unité de queue, le train comportant :
un dispositif de gestion de la sécurité par unité, chaque dispositif ayant deux identifiants qui lui sont propres et comportant des premiers moyens de mémorisation propres à stocker lesdits identifiants, des moyens de traitement de messages propres à élaborer un message comportant les identifiants du dispositif, des moyens de transmission d'un message à destination d'un dispositif d'une autre unité et des moyens de réception d'un message en provenance d'un dispositif d'une autre unité,
un lien de communication d'attelage pour chaque paire d'unités adjacentes, chaque lien de communication d'attelage reliant seulement deux dispositifs d'unités adjacentes, et
un réseau général reliant tous les dispositifs entre eux.

On connaît un train du type précité. Ainsi, le document WO 2012/069223 A1 divulgue le préambule de la revendication 1. Chaque unité d'un tel train comporte un module propre à assurer la réalisation de différentes fonctions liées à la sécurité du train, telles que par exemple le calcul de la vitesse du train, la gestion de l'ouverture des portes ou encore le freinage d'urgence. Une autre fonction primordiale, qui concerne également la sécurité du train, consiste à pouvoir déterminer la composition du train, autrement dit l'ordre selon lequel les unités sont connectées les unes aux autres. La réalisation de cette fonction permet au train de connaître sa longueur, la connaissance de ce paramètre étant indispensable lors du franchissement d'aiguilles à retournement, ou encore de connaître la répartition massique de ses unités, ce qui est utile notamment pour le paramétrage des caractéristiques du train.

Cette détermination de la composition du train est réalisée avant le démarrage du train, à l'arrêt, et est classiquement effectuée par des équipements de sécurité installés au sol, et aptes à déterminer la position relative des unités. De tels équipements de sécurité comportent par exemple des émetteurs radio, des capteurs et/ou des circuits de voie, fonctionnant de manière autonome ou en combinaison les uns avec les autres. Ces équipements transmettent ensuite la composition du train au train lui-même. Le train vérifie alors sa composition par lecture de coupleurs électriques d'attelage installés entre chaque unité, et propres à déterminer, pour chaque unité du train, la présence ou l'absence d'une unité adjacente.

Un but de l'invention est donc de proposer un procédé de détermination de la composition d'un train, en sécurité, permettant de s'affranchir de l'utilisation d'équipements au sol.

A cet effet, l'invention a pour objet un procédé du type précité, caractérisé en ce qu'il comprend les étapes suivantes :
l'émission, sur le réseau général et sur chaque lien de communication d'attelage, par au moins un dispositif, d'un message sécurisé à destination d'un des dispositifs adjacents audit dispositif, le message comportant un des identifiants dudit dispositif,
l'émission, sur le réseau général, par chaque dispositif ayant reçu un identifiant d'un autre dispositif relié par un lien de communication d'attelage, d'au moins un message de reconstitution comportant les deux identifiants dudit dispositif ainsi que l'identifiant reçu,
la réception, par chaque dispositif, des messages de reconstitution émis, et
la détermination, par au moins un dispositif, de la composition du train, ladite étape de détermination consistant en la mise en oeuvre d'un algorithme prédéterminé au sein dudit dispositif.

Suivant d'autres aspects avantageux de l'invention, le procédé comprend une ou plusieurs des caractéristiques suivantes, prises isolément ou suivant toutes les combinaisons techniquement possibles :
chaque unité comporte en outre deux coupleurs électriques d'attelage, chaque coupleur électrique d'attelage étant propre à détecter la présence d'une autre unité, reliée à ladite unité et, lors de l'étape de détermination de la composition du train, l'algorithme de détermination comporte les étapes suivantes :
   la recherche d'un dispositif de queue présumé du train par identification des deux dispositifs qui ne sont reliés qu'à un seul autre dispositif via un lien de communication d'attelage et le choix de l'un de ces deux dispositifs,
   la recherche d'un deuxième dispositif relié au dispositif de queue présumé via un lien de communication d'attelage,
   l'itération de l'étape précédente de proche en proche jusqu'à l'autre dispositif qui n'est relié qu'à un seul autre dispositif via un lien de communication d'attelage, ledit autre dispositif constituant le dispositif de tête présumé, et
   la validation de la complétude du train, les unités présumées tête et queue, correspondant respectivement au dispositif de tête présumé et au dispositif de queue présumé, devant être confirmés comme extrémités du train par lecture des coupleurs électriques d'attelage correspondants ;
chaque dispositif comporte deux modules de gestion de la sécurité, chaque module ayant un identifiant qui lui est propre, et, lors de l'étape initiale d'émission, par chaque dispositif, sur le réseau général, d'un message de diffusion non sécurisé comportant ses deux identifiants, et lors de l'étape d'émission, par chaque dispositif, sur le réseau général, d'au moins un message de reconstitution comportant ses deux identifiants ainsi que l'identifiant reçu, lesdits deux identifiants sont les identifiants des deux modules de gestion de la sécurité qu'il comporte, chaque module émettant son propre identifiant sur le réseau général ;
chaque dispositif comporte un module de gestion de la sécurité, chaque module ayant deux identifiants qui lui sont propres, et, lors de l'étape initiale d'émission, par chaque dispositif, sur le réseau général, d'un message de diffusion non sécurisé comportant ses deux identifiants, et lors de l'étape d'émission, par chaque dispositif, sur le réseau général, d'au moins un message de reconstitution comportant ses deux identifiants ainsi que l'identifiant reçu, lesdits deux identifiants sont les identifiants du module de gestion de la sécurité qu'il comporte ;
lors de l'étape d'émission, par chaque dispositif, sur le réseau général, d'au moins un message de reconstitution comportant ses deux identifiants ainsi que l'identifiant reçu, deux dispositifs émettent en outre, en parallèle sur le réseau général, un message comportant leurs deux identifiants ainsi que la valeur d'une variable indicative de la présence ou de l'absence d'une unité adjacente.

Un exemple est relatif à un train du type précité, pour lequel, dans chaque dispositif, les moyens de traitement de messages sont propres en outre à élaborer un message de reconstitution comportant les deux identifiants du dispositif ainsi qu'un des identifiants d'un dispositif d'une unité adjacente, et en ce qu'au moins un dispositif comporte, en outre, des moyens de détermination de la composition du train.

Le train comprend une ou plusieurs des caractéristiques suivantes, prises isolément ou suivant toutes les combinaisons techniquement possibles :
les moyens de détermination de la composition du train comportent des deuxièmes moyens de mémorisation et des moyens d'exécution d'un algorithme, les deuxièmes moyens de mémorisation étant propres à stocker un algorithme de détermination de la composition du train, les moyens d'exécution étant propres à mettre en oeuvre ledit algorithme de détermination de la composition du train ;
chaque dispositif comporte en outre deux modules de gestion de la sécurité, chaque module ayant un identifiant qui lui est propre ;
chaque dispositif comporte en outre un module de gestion de la sécurité, ledit module ayant deux identifiants qui lui sont propres ;
les premiers moyens de mémorisation sont propres en outre à stocker au moins une variable dont la valeur indique la présence ou de l'absence d'une unité adjacente, les moyens de traitement de messages étant propres en outre à élaborer un message comportant les deux identifiants du dispositif ainsi que la valeur de ladite variable ;
le réseau général est un réseau de type Ethernet ;
chaque unité comporte en outre deux coupleurs électriques d'attelage, chaque coupleur électrique d'attelage étant propre à détecter la présence d'une autre unité, reliée à ladite unité ;
chaque lien de communication d'attelage est conforme à la norme IEEE-802.1q, ou à la norme IEEE-802.1ab ;
les moyens de traitement de messages sont propres en outre à élaborer un message comportant la composition du train fournie par les moyens de détermination de la composition du train.

Ces caractéristiques et avantages de l'invention apparaîtront à la lecture de la description qui va suivre, donnée uniquement à titre d'exemple non limitatif, et faite en référence aux dessins annexés, sur lesquels :
la figure 1 est une représentation schématique d'un train selon un premier mode de réalisation, le train comprenant trois unités,
la figure 2 est une représentation schématique des unités du train de la figure 1 , chaque unité comportant un dispositif de gestion de la sécurité, chaque dispositif comprenant deux modules de gestion de la sécurité,
la figure 3 est une représentation schématique d'un des modules de gestion de la sécurité de la figure 2 ,
la figure 4 est un organigramme représentant un procédé de détermination de la composition d'un train selon le premier mode de réalisation de l'invention, mis en oeuvre par chaque module de gestion de la sécurité de la figure 2 ,
la figure 5 est un organigramme représentant une étape de mise en oeuvre, par chaque module de gestion de la sécurité, d'un algorithme prédéterminé en son sein, l'étape étant issue du procédé de la figure 4 , et
la figure 6 est une représentation schématique des unités d'un train selon un deuxième mode de réalisation.

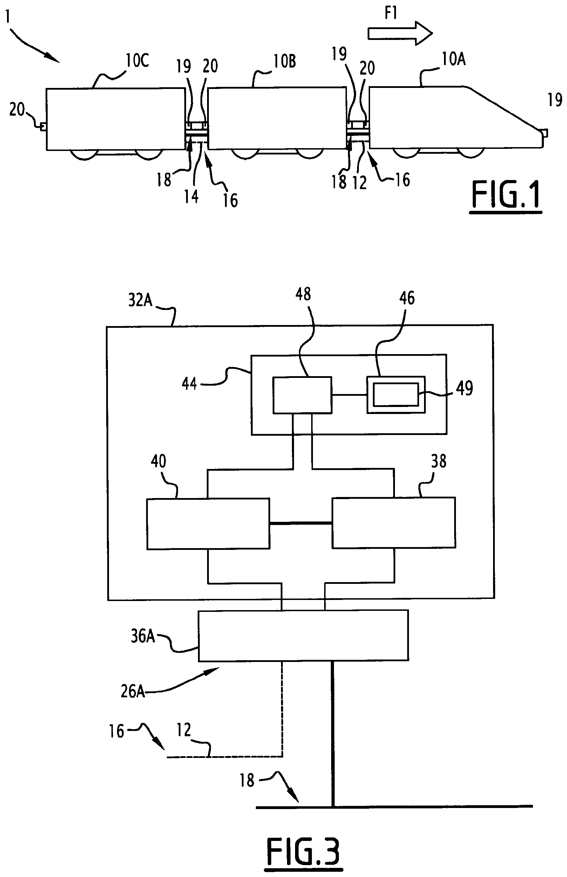

La figure 1 représente un train ferroviaire 1 selon un premier mode de réalisation. Le train 1 comporte une première unité roulante 10A, une deuxième unité roulante 10B et une troisième unité roulante 10C, la deuxième unité 10B étant reliée mécaniquement entre les deux unités 10A, 10C. La première unité 10A est l'unité de tête du train 1 et la troisième unité 10C est l'unité de queue du train 1.

Pour la communication, le train 1 comporte en outre un premier lien de communication d'attelage 12 et un deuxième lien de communication d'attelage 14. Chaque lien de communication d'attelage 12, 14 relie deux unités adjacentes parmi les unités 10A, 10B, 10C. Plus précisément, le premier lien de communication d'attelage 12 relie les unités 10A et 10B, et le deuxième lien de communication d'attelage 14 relie les unités 10B et 10C. Les deux liens de communication d'attelage 12, 14 forment un ensemble 16 de liens de communication d'attelage. Le train 1 comporte en outre un réseau général 18 reliant les unités 10A, 10B, 10C entre elles, comme expliqué par la suite. L'ensemble 16 de liens de communication d'attelage et le réseau général 18 servent à la transmission de données logiques ou d'informations au sein du train 1.

Dans la suite de la description, les termes « avant » et « arrière » s'entendent par rapport à la direction d'avancement du train 1, de l'arrière vers l'avant suivant la flèche F1 sur la figure 1 .

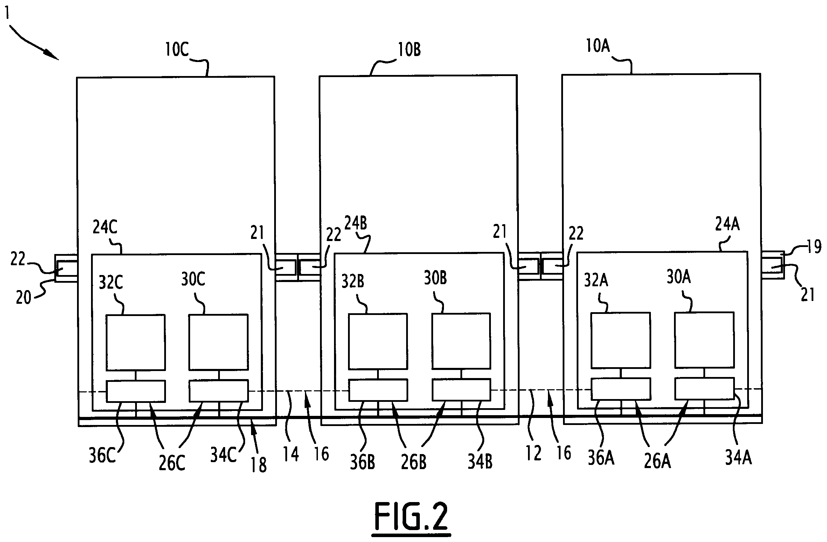

Comme connu en soi, chaque unité 10A, 10B, 10C comporte un attelage avant 19 et un attelage arrière 20, pour assurer la liaison mécanique avec une unité 10A, 10B, 10C adjacente. Comme illustré sur la figure 2 , chaque attelage avant 19 comporte un coupleur électrique d'attelage avant 21 et chaque attelage arrière 20 comporte un coupleur électrique d'attelage arrière 22. Chaque unité 10A, 10B, respectivement 10C comporte en outre un dispositif 24A, 24B, respectivement 24C de gestion de la sécurité, propre à assurer la réalisation de différentes fonctions liées à la sécurité du train 1, et comprenant des moyens 26A, 26B, respectivement 26C de transmission de données.

Le lien de communication d'attelage 12, respectivement 14, relie le dispositif 24B, respectivement 24A, au dispositif 24C. Plus précisément, le lien de communication d'attelage 12, respectivement 14, relie les moyens 26B de transmission de données aux moyens 26A, respectivement 26C, de transmission de données, comme décrit en détail par la suite.

Chaque lien de communication d'attelage 12, 14 est par exemple une liaison filaire Ethernet, conforme à la norme IEEE-802.1q, généralement appelée liaison VLAN. En variante, chaque lien de communication d'attelage 12, 14 est une liaison filaire Ethernet, conforme à la norme IEEE-802.1ab, généralement appelée liaison Ethernet avec trames de type « découverte de réseau ».

En variante encore, chaque lien de communication d'attelage 12, 14 est une liaison filaire autre qu'une liaison filaire Ethernet, telle qu'une liaison série spécifique par exemple.

En variante encore, chaque lien de communication d'attelage 12, 14 est une liaison non filaire, telle que par exemple une liaison radioélectrique, ou encore une liaison par couplage optique ou magnétique.

Le lien de communication d'attelage 12, respectivement 14 est propre à faire circuler des données logiques ou des informations à partir du dispositif 24A, respectivement 24C, vers le dispositif 24B, et inversement, à partir du dispositif 24B vers le dispositif 24A, respectivement 24C.

Le réseau général 18 relie les dispositifs 24A, 24B, 24C entre eux. Plus précisément, le réseau général 18 relie les moyens 26A, 26B, 26C de transmission de données entre eux. Le réseau général 18 est, par exemple, un réseau Ethernet. Le réseau général 18 est propre à faire circuler des données logiques ou des informations à partir d'un dispositif 24A, 24B, 24C vers un autre dispositif 24A, 24B, 24C.

Chaque coupleur électrique d'attelage 21, 22 d'une unité 10A, 10B, respectivement 10C est relié au dispositif 24A, 24B, respectivement 24C correspondant à l'unité. Dans l'exemple de réalisation décrit, chaque coupleur électrique d'attelage 21, 22 d'une unité 10A, 10B, respectivement 10C comprend notamment des contacts électriques propres à détecter la présence d'une autre unité reliée à ladite unité 10A, 10B, respectivement 10C. Il est propre à transmettre, en sécurité, au dispositif 24A, 24B, 24C auquel il est relié, une information de présence ou d'absence d'une unité 10A, 10B, 10C. Cette information de présence ou d'absence se présente sous la forme de deux variables, l'une des variables indiquant l'état libre ou non de l'attelage associé, l'autre variable indiquant l'état occupé ou non de l'attelage associé.

Chaque dispositif 24A, 24B, respectivement 24C comporte en outre un module avant 30A, 30B, respectivement 30C de gestion de la sécurité, ainsi qu'un module arrière 32A, 32B, respectivement 32C de gestion de la sécurité. Chaque dispositif 24A, 24B, 24C comporte dans des mémoires deux identifiants qui lui sont propres, comme décrit par la suite.

Dans l'exemple de réalisation, les moyens 26A, 26B, respectivement 26C de transmission de données comportent un commutateur avant 34A, 34B, respectivement 34C, et un commutateur arrière 36A, 36B, respectivement 36C. Chaque commutateur 34A, 34B, 34C, 36A, 36B, respectivement 36C est relié d'une part à un module 30A, 30B, 30C, 32A, 32B, respectivement 32C et d'autre part au réseau général 18. Chaque commutateur 34A, 34B, 34C, 36A, 36B, 36C est relié en outre aux coupleurs électriques d'attelage avant 21 et arrière 22 de l'unité dans laquelle il est installé. Le commutateur arrière 36A, respectivement 36B est relié en outre, via le lien de communication d'attelage 12, respectivement 14, au commutateur avant 34B, respectivement 34C.

Chaque commutateur 36A, 34B, 36B, 34C est propre à transmettre un message à destination du seul commutateur auquel il est relié via un lien de communication d'attelage 12, 14 ainsi qu'à recevoir un message en provenance de ce même commutateur, et à l'adresser au module auquel il est relié. Chaque commutateur 34A, 34B, 34C, 36A, 36B, 36C est par ailleurs propre à transmettre un message à destination de chaque autre commutateur, sur le réseau général 18. Chaque commutateur 34A, 34B, 34C, 36A, 36B, 36C est propre en outre à recevoir un message en provenance d'un autre commutateur, sur le réseau général 18, et à l'adresser au module auquel il est relié.

En variante, les commutateurs 34A, 34B, 34C, 36A, 36B, 36C sont remplacés par tout moyen de transmission de données sur un réseau filaire ou non filaire.

Les modules avant 30A, 30B, 30C et les modules arrière 32A, 32B, 32C présentent tous la même structure. Dans la suite, seule la structure du module arrière 32A sera donc décrite.

Comme illustré sur la figure 3, le module arrière 32A comporte des premiers moyens de mémorisation 38 et des moyens 40 de traitement de messages, reliés aux premiers moyens de mémorisation 38. Le module arrière 32A comporte également des moyens 44 de détermination de la composition du train 1, reliés aux premiers moyens de mémorisation 38 et aux moyens 40 de traitement de messages.

Les premiers moyens de mémorisation 38 sont connectés au commutateur arrière 36A et sont par exemple formés d'une mémoire non volatile réinscriptible, connue en soi. Ils sont propres à stocker un identifiant Id_{32A}, propre au module arrière 32A. Les premiers moyens de mémorisation 38 sont également propres à stocker des identifiants et des couples d'identifiants transmis par le commutateur arrière 36A. Les couples d'identifiants stockés par les premiers moyens de mémorisation 38 sont appelés couples d'identifiants d'attelage par la suite. Les premiers moyens de mémorisation 38 sont propres en particulier à stocker l'identifiant Id_{30B} propre au module avant 30B. Ils sont propres en outre à stocker les variables dont la valeur indique l'état libre ou occupé de l'attelage arrière 20 de la première unité 10A. Les deux identifiants de chaque dispositif 24A, 24B, 24C sont les identifiants des deux modules de gestion de la sécurité qu'il comporte.

Les moyens 40 de traitement de messages sont connectés au commutateur arrière 36A et sont par exemple formés d'un processeur de données, connu en soi. Les moyens 40 de traitement de messages sont propres à émettre un message vers les autres modules au travers du commutateur arrière 36A. Les moyens 40 de traitement de messages sont propres à élaborer un message de diffusion comportant l'identifiant Id_{32A}. Ils sont propres également à élaborer un message de reconstitution comportant l'identifiant Id_{32A}, l'identifiant du module appartenant au même dispositif que le module arrière 32A, l'identifiant du module relié au module 32A via un lien de communication d'attelage, et la valeur d'une des variables stockées dans les premiers moyens de mémorisation 38. En particulier, les moyens 40 de traitement de messages sont propres à élaborer un message de reconstitution comportant l'identifiant Id_{32A}, l'identifiant Id_{30A}, l'identifiant Id_{30B} et la valeur d'une des variables indiquant l'état libre ou occupé de l'attelage arrière 20 de la première unité 10A. Les moyens 40 de traitement de messages sont également propres à élaborer un message comportant la composition du train 1. Les moyens 40 de traitement de messages sont propres en outre à élaborer une requête de confirmation de présence d'une unité à destination d'un coupleur électrique d'attelage 21, 22.

Les moyens 44 de détermination de la composition du train 1 comportent des deuxièmes moyens de mémorisation 46 et un calculateur 48 pour l'exécution d'un algorithme, relié aux deuxièmes moyens de mémorisation 46.

Les deuxièmes moyens de mémorisation 46 sont par exemple formés d'une mémoire non volatile réinscriptible. Ils comportent une table de reconstitution 49, formée par exemple d'une pile à entrée unique, et propre à stocker une liste d'identifiants. Les deuxièmes moyens de mémorisation 46 sont propres à stocker un algorithme de détermination de la composition du train 1. L'algorithme de détermination de la composition du train 1 sera décrit par la suite dans le procédé de détermination correspondant. Les deuxièmes moyens de mémorisation 46 sont propres à stocker un identifiant Id_{30A}, propre au module avant 30A. Ils sont également propres à stocker des couples d'identifiants transmis par le commutateur arrière 36A, et appelés couples d'identifiants d'unité par la suite. Les deuxièmes moyens de mémorisation 46 sont propres à stocker, en outre, une première variable, une deuxième variable, une troisième variable et une quatrième variable. La première variable correspond à un premier identifiant courant et la deuxième variable correspond à un deuxième identifiant courant. En outre, la troisième variable correspond à l'identifiant d'un module de l'unité de queue présumée du train 1 et la quatrième variable correspond à l'identifiant d'un module de l'unité de tête présumée du train 1.

Le calculateur 48 est relié en outre aux premiers moyens de mémorisation 38 et aux moyens 40 de traitement de messages. Le calculateur 48 est propre à mettre en oeuvre l'algorithme de détermination de la composition du train 1. Il est propre en outre à comparer un à un des identifiants stockés, et à rechercher un identifiant stocké dans les premiers moyens de mémorisation 38 ou dans les deuxièmes moyens de mémorisation 46. Le calculateur 48 est propre également à isoler un couple d'identifiants stocké dans les premiers moyens de mémorisation 38 ou dans les deuxièmes moyens de mémorisation 46, et à instancier et/ou mettre à jour les première, deuxième, troisième et quatrième variables stockées dans les deuxièmes moyens de mémorisation 46.

En variante, chaque module avant 30A, 30B, respectivement 30C est relié à un module arrière 32A, 32B, respectivement 32C, via un lien de communication interne au dispositif 24A, 24B, respectivement 24C, chaque lien de communication étant par exemple une liaison filaire constitutive d'une partie du réseau général 18.

En variante, un seul module de gestion de la sécurité comporte des moyens 44 de détermination de la composition du train 1.

En variante encore, au moins un module de gestion de la sécurité comporte des moyens 44 de détermination de la composition du train 1.

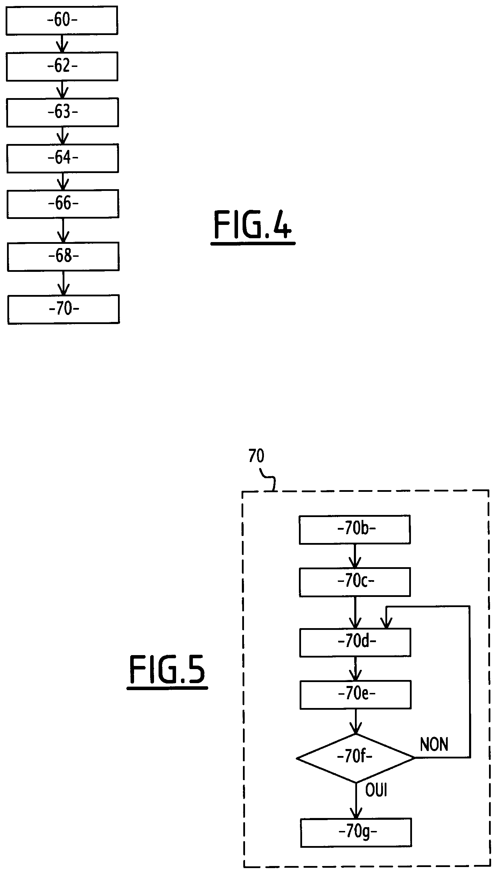

Le procédé de détermination de la composition du train 1, mis en oeuvre par le module arrière 32A, va maintenant être décrit en regard des figures 4 et 5.

Initialement le train 1 est à l'arrêt et les premiers moyens de mémorisation 38 stockent l'identifiant Id_{32A} du module arrière 32A. En outre, les deuxièmes moyens de mémorisation 46 sont paramétrés par un opérateur, de sorte à stocker l'identifiant Id_{30A} du module avant 30A. La table de reconstitution 49 est vide. Les première, deuxième, troisième et quatrième variables comportent la valeur « NULL ». Les trois étapes qui suivent sont mises en oeuvre également, en parallèle, par les modules 30A, 30B, 30C, 32B, 32C.

Comme illustré sur la figure 4, lors d'une étape 60 initiale, les moyens 40 de traitement de messages du module arrière 32A élaborent un message de diffusion non sécurisé comportant l'identifiant Id_{32A} isolé, autrement dit non associé à un autre identifiant. Les moyens 40 de traitement de messages émettent, via le commutateur arrière 36A, le message de diffusion non sécurisé sur le réseau général 18, selon un mode de transmission connu en soi de type « diffusion » (« broadcast » en anglais).

Au cours d'une étape 62 suivante, les premiers moyens de mémorisation 38 reçoivent sur le réseau général 18, via le commutateur arrière 36A, les identifiants isolés Id_{30A}, Id_{30B}, Id_{30C}, Id_{32B}, Id_{32C} contenus dans les messages de diffusion non sécurisés en provenance des modules 30A, 30B, 30C, 32B, 32C. Les premiers moyens de mémorisation 38 stockent alors les identifiants Id_{30A}, Id_{30B}, Id_{30C}, Id_{32B}, Id_{32C}.

Au cours d'une étape 63 suivante, les moyens 40 de traitement de messages du module arrière 32A élaborent plusieurs messages sécurisés, chaque message sécurisé comportant l'identifiant Id_{32A} et l'identifiant d'un module différent du module arrière 32A. Les moyens 40 de traitement de messages élaborent ainsi un nombre de messages sécurisés égal au nombre d'identifiants reçus lors de l'étape 62 précédente. Les moyens 40 de traitement de messages émettent, via le commutateur arrière 36A, les messages sécurisés sur le lien de communication d'attelage 12 et sur le réseau général 18, selon un mode de transmission de sécurité classique, de type liaison bidirectionnelle point à point. Au cours de cette même étape, les moyens de traitement de messages des modules 30A, 32C émettent des messages sécurisés au moins sur le réseau général 18.

Au cours d'une étape 64 suivante, les premiers moyens de mémorisation 38 reçoivent sur le lien de communication d'attelage 12, via le commutateur arrière 36A, uniquement l'identifiant Id_{30B} contenu dans un message sécurisé en provenance du module avant 30B. Les premiers moyens de mémorisation 38 stockent un couple d'identifiants d'attelage formé de l'identifiant Id_{32A} et de l'identifiant Id_{30B}. L'étape 64 est également mise en oeuvre par chaque module 30B, 30C et 32B.

Au cours d'une étape 66 suivante, le coupleur électrique d'attelage 22 de l'unité 10A transmet en sécurité, au dispositif 24A, une information de présence d'une unité. Les premiers moyens de mémorisation 38 stockent alors les valeurs des variables correspondantes, indiquant respectivement l'état non libre et l'état occupé de l'attelage arrière 20 de la première unité 10A.

Au cours de cette même étape 66, les moyens 40 de traitement de messages élaborent un message de reconstitution comportant l'identifiant du module arrière 32A, l'identifiant du module appartenant au même dispositif que le module arrière 32A, l'identifiant du module relié au module 32A via un lien de communication d'attelage, et la valeur d'une des variables stockées dans les premiers moyens de mémorisation 38. Dans l'exemple de réalisation, le message de reconstitution comporte l'identifiant Id_{32A}, l'identifiant Id_{30A}, l'identifiant Id_{30B} et la valeur « occupé ». Les moyens 40 de traitement de messages émettent, via le commutateur arrière 36A, le message de reconstitution sur le réseau général 18. L'étape 66 est mise en oeuvre également, en parallèle, par les modules 30A, 30B, 30C, 32B, 32C. Les moyens de traitement de message de chaque module 30A, 32C élaborent un message de reconstitution comportant uniquement l'identifiant du module 30A, respectivement 32C, l'identifiant du module appartenant au même dispositif que le module 30A, respectivement 32C, soit l'identifiant du module 32A, respectivement 30C, et la valeur « libre ».

Au cours d'une étape 68 suivante, le calculateur 48 reçoit sur le réseau général 18, via le commutateur arrière 36A, les messages de reconstitution en provenance des modules 30A, 30B, 30C, 32B, 32C. Le calculateur 48 isole alors, dans les messages de reconstitution reçus, les couples d'identifiants de modules appartenant à un même dispositif de gestion de la sécurité. Ainsi, chaque couple d'identifiants isolé comporte les identifiants des modules d'une même unité, et forme un couple d'identifiants d'unité. Par exemple, un des couples d'identifiants d'unité est formé de l'identifiant Id_{32C} et de l'identifiant Id_{30C}. Le calculateur 48 transmet ces couples d'identifiants d'unité aux deuxièmes moyens de mémorisation 46, qui les stockent.

En parallèle, au cours de cette même étape 68, le calculateur 48 isole, dans les messages de reconstitution en provenance des modules 30B, 30C, 32B, les couples d'identifiants de modules reliés via un lien de communication d'attelage. Le calculateur 48 transmet ces couples d'identifiants d'attelage aux premiers moyens de mémorisation 38, qui les stockent. Dans l'exemple de réalisation, les premiers moyens de mémorisation 38 stockent deux premiers couples d'identifiants d'attelage, chacun des deux premiers couples étant formé de l'identifiant Id_{30C} et de l'identifiant Id_{32B}. Les premiers moyens de mémorisation 38 stockent également un troisième couple d'identifiants d'attelage formé de l'identifiant Id_{30B} et de l'identifiant Id_{32A}. L'étape 68 est mise en oeuvre également, en parallèle, par les modules 30A, 30B, 30C, 32B, 32C.

Au cours d'une étape 70 suivante, le calculateur 48 du module arrière 32A met en oeuvre l'algorithme de détermination de la composition du train 1. Cette étape est illustrée en détail sur la figure 5.

Au cours d'une étape 70b, le calculateur 48 effectue une comparaison entre les identifiants stockés dans les premiers moyens de mémorisation 38 et les couples d'identifiants d'attelage stockés dans les premiers moyens de mémorisation 38. Il isole alors les deux identifiants ne figurant dans aucun couple d'identifiants d'attelage stocké. Dans l'exemple de réalisation, les deux identifiants ne figurant dans aucun couple d'identifiants d'attelage stocké sont l'identifiant Id_{30A} et l'identifiant Id_{32C}. Le calculateur 48 isole ensuite, de manière arbitraire, un des deux identifiants, par exemple l'identifiant Id_{32C}, et le désignent comme étant l'identifiant d'un module de l'unité de queue présumée du train 1. Le calculateur 48 désigne également l'identifiant Id_{32C} comme étant le premier identifiant courant et le transmet aux deuxièmes moyens de mémorisation 46, qui le stockent dans la table 49. Le calculateur 48 désigne l'identifiant Id_{30A} comme étant l'identifiant d'un module de l'unité de tête présumée du train 1. En variante, le calculateur 48 désigne l'identifiant Id_{30A} comme étant l'identifiant d'un module de l'unité de queue présumée du train 1, l'identifiant Id_{32C} étant désigné comme étant l'identifiant d'un module de l'unité de tête présumée du train 1.

Au cours d'une étape 70c suivante, le calculateur 48 recherche, dans les deuxièmes moyens de mémorisation 46, le premier identifiant courant parmi les couples d'identifiants d'unité stockés. Le calculateur 48 isole alors le couple d'identifiants d'unité comportant le premier identifiant courant et isolent l'autre identifiant de ce couple, le calculateur 48 désignant alors cet identifiant comme étant le deuxième identifiant courant. Le calculateur 48 transmet le deuxième identifiant courant aux deuxièmes moyens de mémorisation 46, qui le stockent dans la table 49.

Au cours d'une étape 70d suivante, le calculateur 48 recherche, dans les premiers moyens de mémorisation 38, le deuxième identifiant courant parmi les couples d'identifiants d'attelage stockés. Le calculateur 48 isole alors le couple d'identifiants d'attelage comportant le deuxième identifiant courant et isolent l'autre identifiant de ce couple, le calculateur 48 désignant alors cet identifiant comme étant le premier identifiant courant. Le calculateur 48 transmet le premier identifiant courant aux deuxièmes moyens de mémorisation 46, qui le stockent dans la table 49. Une étape 70e suivante est alors mise en oeuvre par le calculateur 48, l'étape 70e étant identique à l'étape 70c.

Au cours d'une étape 70f suivante, le calculateur 48 compare le deuxième identifiant courant à l'identifiant désigné lors de l'étape 70b comme étant l'identifiant d'un module de l'unité de tête présumée du train 1, en l'occurrence l'identifiant Id_{30A}.

Si les deux identifiants sont différents, l'étape 70d est ré-effectuée.

Si les deux identifiants sont les mêmes, une étape 70g suivante est mise en oeuvre par le module arrière 32A comme décrit par la suite.

Lors de l'étape 70g, les moyens 40 de traitement de messages élaborent un message comportant le contenu de la table 49. Les moyens 40 de traitement de messages élaborent également, au cours de cette même étape, une requête de confirmation de présence d'une unité, à destination du coupleur électrique d'attelage 21 de l'unité 10A, et du coupleur électrique d'attelage 22 de l'unité 10C. Les moyens 40 de traitement de messages émettent, via le commutateur arrière 36A, le message comportant le contenu de la table 49, ainsi que la requête de confirmation de présence à destination du coupleur électrique d'attelage 22 de l'unité 10C, sur le réseau général 18. La requête de confirmation de présence d'une unité, à destination du coupleur électrique d'attelage 21 de l'unité 10A, est directement transmise par les moyens 40 de traitement de messages au coupleur électrique d'attelage 21, via le commutateur arrière 36A.

Dans l'exemple décrit, le coupleur électrique d'attelage 21, respectivement 22, de l'unité 10A, respectivement 10C, indique qu'aucune unité n'est connectée à l'unité 10A, respectivement à l'unité 10C. Si, au cours de l'étape 70g, au moins un des deux coupleurs électriques interrogés indique qu'une unité est connectée, le procédé de détermination de la composition du train 1 est interrompu au cours d'une étape 72, non représentée. Un opérateur peut alors intervenir pour effectuer par exemple une opération de maintenance sur les liens de communication d'attelage et / ou le réseau général.

L'algorithme de détermination de la composition du train 1 mis en oeuvre par le calculateur 48 est interrompu dans le cas où un module de gestion de la sécurité donné apparaît comme étant relié, via des liens de communication d'attelage, à deux modules différents.

En complément, le procédé comporte une étape supplémentaire 74 non représentée, effectuée après l'étape 70g. Au cours de cette étape 74, les moyens 40 de traitement de messages élaborent une requête de test du lien de communication d'attelage 12 et une requête de test du lien de communication d'attelage 14. Les moyens 40 de traitement de messages émettent, via le commutateur arrière 36A, la requête de test du lien de communication d'attelage 12 à destination du module 30B, sur le réseau général 18. Ils émettent également la requête de test du lien de communication d'attelage 14 à destination des modules 32B, 30C, sur le réseau général 18. Si, au cours de l'étape 74, au moins un module indique que le lien de communication d'attelage auquel il est associé est défectueux, l'étape 72 est effectuée.

En variante ou en complément, les étapes 70b, 70c, 70d, 70e, 70f et 70g sont mises en oeuvre, en parallèle, par les modules 30A, 30B, 30C, 32B, 32C.

Le procédé de détermination de la composition du train 1 selon ce mode de réalisation de l'invention permet ainsi de s'affranchir de l'utilisation d'équipements au sol.

En outre, le procédé de détermination de la composition du train 1 selon ce mode de réalisation de l'invention n'impose pas de contraintes particulières sur l'aspect sécuritaire ou non des liens de communication d'attelage 12, 14, contrairement au deuxième mode de réalisation décrit par la suite.

Ce premier mode de réalisation constitue le mode de réalisation préférentiel de l'invention.

En variante de réalisation, les modules de gestion de la sécurité appartenant à un même dispositif sont reliés par un lien filaire. Ainsi, chaque module de gestion de la sécurité a accès à l'identifiant du module appartenant au même dispositif, et les deuxièmes moyens de mémorisation 46 stockent cet identifiant, avant la mise en oeuvre du procédé selon l'invention. Selon cette variante, les deuxièmes moyens de mémorisation 46 ne sont pas paramétrés par un opérateur.

En variante encore, les identifiants Id_{30A} et Id_{32A} suivent une règle indiquant l'appartenance du module avant 30A et du module arrière 32A au dispositif 24A. Selon cette variante, le calculateur 48 est propre à appliquer, pour tous les identifiants stockés dans les premiers moyens de mémorisation 38, une règle de reconnaissance de l'identifiant de l'autre module de gestion de la sécurité appartenant au dispositif 24A, différent du module arrière 32A. Dans l'exemple de réalisation, cet autre module est le module avant 30A. Selon cette variante, lors de l'étape 62 de réception par les premiers moyens de mémorisation 38 des identifiants isolés Id_{30A}, Id_{30B}, Id_{30C}, Id_{32B}, Id_{32C}, le calculateur 48 identifie l'identifiant Id_{30A}, au moyen de la règle de reconnaissance. Le calculateur 48 transmet alors cet l'identifiant Id_{30A} aux deuxièmes moyens de mémorisation 46, qui le stockent.

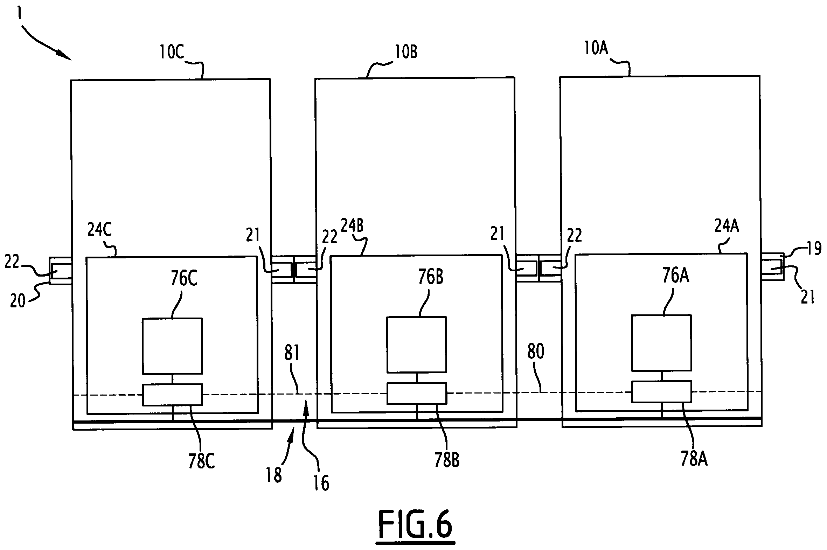

La figure 6 illustre un deuxième mode de réalisation, pour lequel les éléments analogues au premier mode de réalisation décrit précédemment sont repérés par des références identiques.

Selon ce deuxième mode de réalisation, chaque dispositif 24A, 24B, respectivement 24C de gestion de la sécurité ne comporte plus qu'un seul module 76A, 76B, respectivement 76C de gestion de la sécurité. En outre, les moyens 26A, 26B, respectivement 26C de transmission de données comportent un seul commutateur 78A, 78B, respectivement 78C.

A la différence des modules du premier mode de réalisation, chaque module 76A, 76B, 76C comporte une partie avant ayant un premier identifiant, et une partie arrière ayant un deuxième identifiant. Ces caractéristiques exceptées, les modules 76A, 76B, 76C sont analogues aux modules 30A, 30B, 30C, 32A, 32B, 32C du premier mode de réalisation.

Chaque commutateur 78A, 78B, respectivement 78C est relié d'une part à un module 76A, 76B, respectivement 76C et d'autre part au réseau général 18. Le commutateur 78A, respectivement 78C est relié en outre, via un lien de communication d'attelage 80, respectivement 81, au commutateur 78B. A la différence des commutateurs du premier mode de réalisation, chaque commutateur 78A, 78B, 78C est propre à transmettre un message à destination du ou de chaque commutateur auquel il est relié via un lien de communication d'attelage 80, 81 ainsi qu'à recevoir un message en provenance de ce ou de ces commutateur(s), et à l'adresser au module auquel il est relié. Cette caractéristique exceptée, les commutateurs 78A, 78B, 78C sont analogues aux commutateurs 34A, 34B, 34C, 36A, 36B, 36C du premier mode de réalisation.

En variante, les commutateurs 78A, 78B, 78C sont remplacés par tout moyen de transmission de données sur un réseau filaire ou non filaire.

En variante encore, chacun des moyens 26A, 26B, respectivement 26C de transmission de données comporte un commutateur avant et un commutateur arrière, les commutateurs avant et arrière étant reliés au module 76A, 76B, respectivement 76C.

A la différence du premier mode de réalisation, chaque lien de communication d'attelage 80, 81 est une liaison hautement sécuritaire, propre à garantir, en sécurité, l'identité du destinataire et l'intégrité des données qu'elle transmet.

Le procédé selon le deuxième mode de réalisation de l'invention, mis en oeuvre par le module 76B, va maintenant être décrit. Les trois étapes 60, 62, 63 qui suivent sont mises en oeuvre également, en parallèle, par les modules 76A, 76C.

Initialement le train 1 est à l'arrêt et les premiers moyens de mémorisation 38 stockent les deux identifiants du module 76B.

Au cours de l'étape 60 initiale, les moyens 40 de traitement de messages émettent sur le réseau général 18, via le commutateur 78B, le message de diffusion non sécurisé comportant les deux identifiants du module 76B.

Au cours de l'étape 62 suivante, les premiers moyens de mémorisation 38 du module 76B reçoivent sur le réseau général 18, via le commutateur 78B, les identifiants contenus dans les messages de diffusion non sécurisés en provenance des modules 76A, 76C. Les premiers moyens de mémorisation 38 stockent alors ces identifiants.

Au cours de l'étape 63 suivante, les moyens 40 de traitement de messages du module 76B élaborent plusieurs messages sécurisés, chaque message sécurisé comportant le premier identifiant ou le deuxième identifiant du module 76B, et un des identifiants d'un module différent du module 76B. Les moyens 40 de traitement de messages élaborent ainsi un nombre de messages sécurisés égal au double du nombre d'identifiants reçus lors de l'étape 62 précédente. Les moyens 40 de traitement de messages émettent, via le commutateur 78B, sur le lien de communication d'attelage 80, respectivement 81, et sur le réseau général 18, les messages sécurisés comportant le premier identifiant, respectivement le deuxième identifiant, selon un mode de transmission de sécurité classique, de type liaison bidirectionnelle point à point.

Les parties avant, respectivement arrière, des modules de gestion de sécurité selon ce deuxième mode de réalisation sont analogues aux modules avant, respectivement arrière, du premier mode de réalisation. Moyennant cette substitution, les étapes 64, 66, 68, 70b, 70c, 70d, 70e, 70f, 70g, 72 et 74 suivantes sont identiques aux étapes correspondantes du procédé selon le premier mode de réalisation, et ne sont donc pas décrites à nouveau.

En variante ou en complément, les étapes 70b, 70c, 70d, 70e, 70f et 70g sont également mises en oeuvre, en parallèle, par les modules 76A, 76C.

Le procédé de détermination de la composition d'un train selon l'invention permet ainsi de s'affranchir de l'utilisation d'équipements au sol.

La description a été faite en référence à un train comportant trois unités roulantes. L'homme du métier comprendra néanmoins que l'invention s'applique de la même manière à un train comportant un nombre N d'unités roulantes, N étant un entier supérieur ou égal à deux, de préférence supérieur ou égal à quatre.

## Revendications

1. Procédé de détermination de la composition d'un train (1) comportant une pluralité de véhicules groupés en unités successives (10A, 10B, 10C) reliées entre elles, parmi lesquelles une unité de tête (10A) et une unité de queue (10C), le train (1) comportant :
- un dispositif (24A, 24B, 24C) de gestion de la sécurité par unité (10A, 10B, 10C), chaque dispositif (24A, 24B, 24C) ayant deux identifiants qui lui sont propres,
- un lien de communication d'attelage (12, 14 ; 80, 81) pour chaque paire d'unités adjacentes, chaque lien de communication d'attelage (12, 14 ; 80, 81) reliant seulement deux dispositifs (24A, 24B, 24C) d'unités adjacentes,
- un réseau général (18) reliant tous les dispositifs (24A, 24B, 24C) entre eux,
le procédé comprenant une étape initiale (60) d'émission, par chaque dispositif (24A, 24B, 24C), sur le réseau général (18), d'un message de diffusion non sécurisé comportant ses deux identifiants, et une étape (62) de réception, par chaque dispositif (24A, 24B, 24C), de messages comportant les identifiants des autres dispositifs (24A, 24B, 24C), le procédé étant **caractérisé en ce qu'**il comprend les étapes suivantes :
- l'émission (63), sur le réseau général (18) et sur chaque lien de communication d'attelage (12, 14 ; 80, 81), par au moins un dispositif (24A, 24B, 24C), d'un message sécurisé à destination d'un des dispositifs (24A, 24B, 24C) adjacents audit dispositif (24A, 24B, 24C), le message comportant un des identifiants dudit dispositif (24A, 24B, 24C),
- l'émission (66), sur le réseau général (18), par chaque dispositif (24A, 24B, 24C) ayant reçu un identifiant d'un autre dispositif (24A, 24B, 24C) relié par un lien de communication d'attelage (12, 14; 80, 81), d'au moins un message de reconstitution comportant les deux identifiants dudit dispositif ainsi que l'identifiant reçu,
- la réception (68), par chaque dispositif (24A, 24B, 24C), des messages de reconstitution émis, et
- la détermination (70), par au moins un dispositif (24A, 24B, 24C), de la composition du train (1), ladite étape (70) de détermination consistant en la mise en oeuvre d'un algorithme prédéterminé au sein dudit dispositif (24A, 24B, 24C).

2. Procédé selon la revendication 1, **caractérisé en ce que** chaque unité (10A, 10B, 10C) comporte en outre deux coupleurs électriques d'attelage (21, 22), chaque coupleur électrique d'attelage (21, 22) étant propre à détecter la présence d'une autre unité (10A, 10B, 10C), reliée à ladite unité et **en ce que**, lors de l'étape (70) de détermination de la composition du train (1), l'algorithme de détermination comporte les étapes suivantes :
- la recherche (70b) d'un dispositif de queue présumé du train par identification des deux dispositifs (24A, 24B, 24C) qui ne sont reliés qu'à un seul autre dispositif (24A, 24B, 24C) via un lien de communication d'attelage (12, 14 ; 80, 81) et le choix de l'un de ces deux dispositifs,
- la recherche (70c) d'un deuxième dispositif (24A, 24B, 24C) relié au dispositif de queue présumé via un lien de communication d'attelage (12, 14 ; 80, 81),
- l'itération (70f) de l'étape précédente de proche en proche jusqu'à l'autre dispositif (24A, 24B, 24C) qui n'est relié qu'à un seul autre dispositif (24A, 24B, 24C) via un lien de communication d'attelage (12, 14 ; 80, 81), ledit autre dispositif (24A, 24B, 24C) constituant le dispositif de tête présumé, et
- la validation (70g) de la complétude du train (1), les unités (10A, 10B, 10C) présumées tête et queue, correspondant respectivement au dispositif de tête présumé et au dispositif de queue présumé, devant être confirmés comme extrémités du train (1) par lecture des coupleurs électriques d'attelage (21, 22) correspondants.

3. Procédé selon la revendication 2, **caractérisé en ce que** chaque dispositif (24A, 24B, 24C) comporte deux modules (30A, 30B, 30C, 32A, 32B, 32C) de gestion de la sécurité, chaque module (30A, 30B, 30C, 32A, 32B, 32C) ayant un identifiant qui lui est propre, et **en ce que**, lors de l'étape initiale (60) d'émission, par chaque dispositif (24A, 24B, 24C), sur le réseau général (18), d'un message de diffusion non sécurisé comportant ses deux identifiants, et lors de l'étape (66) d'émission, par chaque dispositif (24A, 24B, 24C), sur le réseau général (18), d'au moins un message de reconstitution comportant ses deux identifiants ainsi que l'identifiant reçu, lesdits deux identifiants sont les identifiants des deux modules de gestion de la sécurité (30A, 30B, 30C, 32A, 32B, 32C) qu'il comporte, chaque module (30A, 30B, 30C, 32A, 32B, 32C) émettant son propre identifiant sur le réseau général (18).

4. Procédé selon la revendication 2, **caractérisé en ce que** chaque dispositif (24A, 24B, 24C) comporte un module (76A, 76B, 76C) de gestion de la sécurité, chaque module (76A, 76B, 76C) ayant deux identifiants qui lui sont propres, et **en ce que**, lors de l'étape initiale (60) d'émission, par chaque dispositif (24A, 24B, 24C), sur le réseau général (18), d'un message de diffusion non sécurisé comportant ses deux identifiants, et lors de l'étape (66) d'émission, par chaque dispositif (24A, 24B, 24C), sur le réseau général (18), d'au moins un message de reconstitution comportant ses deux identifiants ainsi que l'identifiant reçu, lesdits deux identifiants sont les identifiants du module de gestion de la sécurité (76A, 76B, 76C) qu'il comporte.

5. Procédé selon l'une quelconque des revendications précédentes, **caractérisé en ce que** lors de l'étape (66) d'émission, par chaque dispositif (24A, 24B, 24C), sur le réseau général (18), d'au moins un message de reconstitution comportant ses deux identifiants ainsi que l'identifiant reçu, deux dispositifs (24A, 24B, 24C) émettent en outre, en parallèle sur le réseau général (18), un message comportant leurs deux identifiants ainsi que la valeur d'une variable indicative de la présence ou de l'absence d'une unité adjacente.

## Patentansprüche

1. Bestimmungsverfahren für die Zusammensetzung eines Zugs (1), der mehrere in aufeinanderfolgende Einheiten (10A, 10B, 10C) gruppierte, miteinander verbundene Fahrzeuge, darunter eine Kopfeinheit (10A) und eine Heckeinheit (10C) umfasst, wobei der Zug (1) umfasst:
- eine Sicherheitsmanagement-Vorrichtung (24A, 24B, 24C) pro Einheit (10A, 10B, 10C), wobei jede Vorrichtung (24A, 24B, 24C) zwei ihr eigene Kennungen hat,
- eine Kupplungskommunikationsverbindung (12, 14; 80, 81) für jedes Paar angrenzender Einheiten, wobei jede Kupplungskommunikationsverbindung (12, 14; 80, 81) nur zwei Vorrichtungen (24A, 24B, 24C) angrenzender Einheiten verbindet,
- ein allgemeines Netz (18), das alle Vorrichtungen (24A, 24B, 24C) miteinander verbindet,
wobei das Verfahren einen Anfangsschritt (60) zum Aussenden, durch jede Vorrichtung (24A, 24B, 24C) über das allgemeine Netz (18), einer ihre zwei Kennungen umfassenden, nicht gesicherten Verbreitungsnachricht, und einen Schritt (62) zum Empfangen, durch jede Vorrichtung (24A, 24B, 24C), von die Kennungen der anderen Vorrichtungen (24A, 24B, 24C) beinhaltenden Nachrichten umfasst, wobei das Verfahren **dadurch gekennzeichnet ist, dass** es die folgenden Schritte umfasst:
- Aussenden (63), über das allgemeine Netz (18) und über jede Kupplungskommunikationsverbindung (12, 14; 80, 81), durch mindestens eine Vorrichtung (24A, 24B, 24C), einer gesicherten Nachricht an eine der an die besagte Vorrichtung (24A, 24B, 24C) angrenzenden Vorrichtungen (24A, 24B, 24C), wobei die Nachricht eine der Kennungen der besagten Vorrichtung (24A, 24B, 24C) beinhaltet,
- Aussenden (66), über das allgemeine Netz (18), durch jede Vorrichtung (24A, 24B, 24C), die eine Kennung einer anderem Vorrichtung (24A, 24B, 24C) empfangen hat, die durch eine Kupplungskommunikationsverbindung (12, 14; 80, 81) verbunden ist, mindestens einer Wiederherstellungsnachricht, die die zwei Kennungen der besagten Vorrichtung (24A, 24B, 24C) sowie die empfangene Kennung beinhaltet,
- Empfangen (68), durch jede Vorrichtung (24A, 24B, 24C), der ausgesendeten Wiederherstellungsnachrichten, und
- Bestimmen (70), durch mindestens eine Vorrichtung (24A, 24B, 24C), der Zusammensetzung des Zugs (1), wobei der Bestimmungsschritt (70) aus der Umsetzung eines vorbestimmten Algorithmus in der besagten Vorrichtung (24A, 24B, 24C) besteht.

2. Verfahren nach Anspruch 1, **dadurch gekennzeichnet, dass** jede Einheit (10A, 10B, 10C) darüber hinaus zwei Kupplungsstromkoppler (21, 22) umfasst, wobei jeder Kupplungsstromkoppler (21, 22) dazu geeignet ist, das Vorhandensein einer anderen mit der besagten Einheit verbundenen Einheit (10A, 10B, 10C) zu erfassen, und dass beim Bestimmungsschritt (70) für die Zusammensetzung des Zugs (1) der Bestimmungsalgorithmus die folgenden Schritte umfasst:
- Suchen (70b) einer vermutlichen Heckvorrichtung des Zugs durch Identifikation der zwei Vorrichtungen (24A, 24B, 24C), die über eine Kupplungskommunikationsverbindung (12, 14; 80, 81) nur mit einer einzigen anderen Vorrichtung (24A, 24B, 24C) verbunden sind, und die Wahl einer der zwei Vorrichtungen,
- Suchen (70c) einer zweiten Vorrichtung (24A, 24B, 24C), die über eine Kupplungskommunikationsverbindung (12, 14; 80, 81) mit der Heckvorrichtung verbunden ist,
- schrittweises Iterieren (70f) des vorhergehenden Schritts bis zur anderen Vorrichtung (24A, 24B, 24C), die über eine Kupplungskommunikationsverbindung (12, 14; 80, 81) nur mit einer einzigen anderen Vorrichtung (24A, 24B, 24C) verbunden ist, wobei die besagte andere Vorrichtung (24A, 24B, 24C) die mutmaßliche Kopfvorrichtung darstellt, und
- Validieren (70g) der Vollständigkeit des Zugs (1), wobei die mutmaßlichen Kopf- und Heckeinheiten (10A, 10B, 10C), die jeweils der mutmaßlichen Kopfeinheit und der mutmaßlichen Heckeinheit entsprechen, durch Auslesen der entsprechenden Kupplungsstromkoppler (21, 22) als Enden des Zugs (1) bestätigt werden müssen.

3. Verfahren nach Anspruch 2, **dadurch gekennzeichnet, dass** jede Vorrichtung (24A, 24B, 24C) zwei Sicherheitsmanagement-Module (30A, 30B, 30C, 32A, 32B, 32C) umfasst, wobei jedes Modul (30A, 30B, 30C, 32A, 32B, 32C) eine ihm eigene Kennung hat, und dass beim Anfangsschritt (60) zum Aussenden, durch jede Vorrichtung (24A, 24B, 24C), über das allgemeine Netz (18), einer ihre zwei Kennungen umfassenden, nicht gesicherten Verbreitungsnachricht, und beim Aussendeschritt (66), durch jede Vorrichtung (24A, 24B, 24C), über das allgemeine Netz (18), mindestens einer Wiederherstellungsnachricht, die ihre zwei Kennungen sowie die empfangene Kennung beinhaltet, die besagten zwei Kennungen die Kennungen der zwei Sicherheitsmanagement-Module (30A, 30B, 30C, 32A, 32B, 32C) sind, die sie umfasst, wobei jedes Modul (30A, 30B, 30C, 32A, 32B, 32C) seine eigene Kennung über das allgemeine Netz (18) aussendet.

4. Verfahren nach Anspruch 2, **dadurch gekennzeichnet, dass** jede Vorrichtung (24A, 24B, 24C) ein Sicherheitsmanagement-Modul (76A, 76B, 76C) umfasst, wobei jedes Modul (76A, 76B, 76C) zwei ihm eigene Kennungen hat, und dass beim Anfangsschritt (60) zum Aussenden, durch jede Vorrichtung (24A, 24B, 24C) über das allgemeine Netz (18), einer ihre zwei Kennungen umfassenden, nicht gesicherten Verbreitungsnachricht, und beim Aussendeschritt (66), durch jede Vorrichtung (24A, 24B, 24C) über das allgemeine Netz (18), mindestens einer Wiederherstellungsnachricht, die ihre zwei Kennungen sowie die empfangene Kennung beinhaltet, die besagten zwei Kennungen die Kennungen des Sicherheitsmanagement-Moduls (76A, 76B, 76C) sind, die sie beinhaltet.

5. Verfahren nach einem der vorhergehenden Ansprüche, **dadurch gekennzeichnet, dass** beim Aussendeschritt (66), durch jede Vorrichtung (24A, 24B, 24C) über das allgemeine Netz (18), mindestens einer Wiederherstellungsnachricht, die ihre zwei Kennungen sowie die empfangene Kennung beinhaltet, zwei Vorrichtungen (24A, 24B, 24C) darüber hinaus über das allgemeine Netz (18) parallel eine Nachricht aussenden, die ihre zwei Kennungen sowie den Wert einer Variablen angibt, die das Vorhandensein oder nicht Vorhandensein einer angrenzenden Einheit angibt.

## Claims

1. A method for determining the composition of a train (1) including a plurality of vehicles grouped as successive units (10A, 10B, 10C) connected to each other, among which a head unit (10A) and a tail unit (10C), the train including:
- a safety management device (24A, 24B, 24C) per unit (10A, 10B, 10C), each device (24A, 24B, 24C) having two identifiers which are specific to it,
- a coupling communication link (12, 14; 80, 81) for each pair of adjacent units, each coupling communication link (12, 14; 80, 81) only connecting two devices (24A, 24B, 24C) of adjacent units,
- a general network (118) connecting all the devices (24A, 24B, 24C) to each other,
the method comprising an initial step (60) for transmitting, by each device (24A, 24B, 24C), over the general network (118), a non-secured broadcast message including its two identifiers, and a step (62) for receiving, by each device (24A, 24B, 24C), messages including the identifiers of the other devices (24A, 24B, 24C), the method being **characterised in that** it comprises the following steps:
- transmitting (63) over the general network (118) and over each coupling communication link (12, 14; 80, 81), with at least one device (24A, 24B, 24C) a secured message to one of the devices (24A, 24B, 24C) adjacent to said device (24A, 24B, 24C), the message including one of the identifiers of said device (24A, 24B, 24C),
- transmitting over the general network (118), with each device (24A, 24B, 24C) having received an identifier of another device (24A, 24B, 24C) connected through a coupling communication link (12, 14; 80, 81), at least one restoration message including the two identifiers of said device as well as the received identifier,
- receiving (68), with each device (24A, 24B, 24C), transmitted restoration messages, and
- determining (70), with at least one device (24A, 24B, 24C), the composition of the train (1), said determination step (70) consisting in the application of a predetermined algorithm within said device (24A, 24B, 24C).

2. The method according to claim 1, **characterised in that** each unit (10A, 10B, 10C) further includes two coupling electric couplers (21, 22), each coupling electric coupler (21, 22) being capable of detecting the presence of another unit (10A, 10B, 10C) connected to said unit and wherein, during the step (70) for determining the composition of the train (1), the determination algorithm includes the following steps:
seeking (70b) an assumed tail device of the train by identifying two devices (24A, 24B, 24C) which are only connected to a single other device (24A, 24B, 24C) via a coupling communication link (12, 14; 80, 81) and the selection of one of the these two devices,
seeking (70c) a second device (24A, 24B, 24C) connected to the assumed tail device via a coupling communication link (12, 14;80, 81),
iterating (70F) the preceding step, step-by-step as far as the other device (24A, 24B, 24C) which is only connected to a single other device (24A, 24B, 24C) via a coupling communication link (12, 14; 80, 81) said other device (24A, 24B, 24C) forming the assumed head device, and
validating (70g) the completeness of the train (1) the assumed head and tail units (10A, 10B, 10C) respectively corresponding to the assumed head device and to the assumed tail device, having to be confirmed as ends of the train (1) by reading the corresponding coupling electric couplers (21, 22).

3. The method according to claim 2, **characterised in that** each device (24A, 24B, 24C) includes two safety management modules (30A, 30B, 30C, 32A, 32B, 32C) , each module (30A, 30B, 30C, 32A, 32B, 32C) having an identifier which is specific to it, and wherein, during the initial step (60) for transmitting, with each device (24A, 24B, 24C), over the general network (18), a non-secured broadcast message including its two identifiers, and during step (66) for transmitting, with each device (24A, 24B, 24C), over the general network (18), at least one restoration message including its two identifiers as well as the received identifier, said two identifiers are the identifiers of the two safety management modules (30A, 30B, 30C, 32A, 32B, 32C) which it includes, each module (30A, 30B, 30C, 32A, 32B, 32C) transmitting its own identifier over the general network (18).

4. The method according to claim 2, **characterised in that** each device (24A, 24B, 24C) includes a safety management module (76A, 76B, 76C), each module (76A, 76B, 76C) having two identifiers which are specific to it, and **in that** during the initial step (60) for transmitting, with each device (24A, 24B, 24C), over the general network, a non-secured broadcast message including its two identifiers and during step (66) for transmitting, with each device (24A, 24B, 24C), over the general network (118), at least one restoration message including its tow identifiers as well as the received identifier, said two identifiers are the identifiers of the safety management module (76A, 76B, 76C) which it includes.

5. The method according to any one of the preceding claims, **characterised in that** during step (66) for transmitting, with each device (24A, 24B, 24C), over the general network (18), at least one restoration message including its two identifiers as well as the received identifier, two devices (24A, 24B, 24C) further transmit in parallel over the general network (18), a message including their two identifiers as well as the value of a variable indicative of the presence or absence of an adjacent unit.
